# EUROPEAN PATENT APPLICATION

(11) **EP 2 282 026 A1**
(43) Date of publication of application: **09.02.2011**
(21) Application number: 09731562.6
(22) Date of filing: 10.04.2009
(51) Int. Cl.: F01N 3/20, B01D 53/94, F01N 3/08, F01N 3/24, F01N 3/28

(54) **EXHAUST PURIFYING SYSTEM FOR INTERNAL COMBUSTION ENGINE**

(30) Priority: 17.04.2008 JP 2008108165; 17.04.2008 JP 2008107916
(71) Applicant: Toyota Jidosha Kabushiki Kaisha, Toyota-shi, Aichi 471-8571 (JP)
(72) Inventor: TSUJIMOTO, Kenichi, Toyota-shi Aichi 471-8571 (JP); INOUE, Mikio, Toyota-shi Aichi 471-8571 (JP)
(74) Representative: Kuhnen & Wacker
(86) International application number: PCT/JP2009/057386
(87) International publication number: WO 2009/128407

(57) **Abstract**

There is provided an exhaust gas purification system for an internal combustion engine in which exhaust gas that is in a state in which an even concentration distribution of reducing agent is achieved is caused to flow into an exhaust gas purification apparatus. The system includes a small-diameter catalyst 7 that is provided in an exhaust pipe 3 upstream of an NOx catalyst 4 and adapted in such a way that not the entire amount but a portion of the exhaust gas flowing in the exhaust pipe 3 passes through it, a fuel addition valve 5 that is provided upstream of the small-diameter catalyst 7 and adds fuel to the exhaust gas flowing into the small-diameter catalyst 7, and an isolation pipe 8 that separates the cross section of the exhaust pipe 3 into a catalyst side passage 8a through which catalyst outflowing exhaust gas is caused to pass and a detour side passage 3c through which catalyst detouring exhaust gas is caused to pass, over a region from the downstream end of the small-diameter catalyst 7 to a predetermined position between the small-diameter catalyst 7 and the NOx catalyst 4.

## Description

### TECHNICAL FIELD

The present invention relates to an exhaust gas purification system for an internal combustion engine.

### BACKGROUND ART

When supplying reducing agent to an exhaust gas purification apparatus provided in an exhaust passage of an internal combustion engine, there is a known method in which reducing agent is added to the exhaust gas through a reducing agent addition valve provided in the exhaust passage upstream of the exhaust gas purification apparatus.

In recent years, a pre-stage catalyst that is configured to allow not the entire amount of the exhaust gas flowing in the exhaust passage but only a portion thereof to pass through it is provided between the reducing agent addition valve and the exhaust gas purification apparatus in some cases. For example, Patent document 1 discloses an arrangement in which a reforming catalyst having a cross section smaller than the exhaust passage is provided in the exhaust passage between a fuel addition valve that adds fuel as a reducing agent to the exhaust gas and an NOx storage reduction catalyst (which will be simply referred to as the "NOx catalyst" hereinafter).

In the exhaust gas purification system having the above configuration, fuel added to the exhaust gas through the fuel addition valve is reformed in the reforming catalyst and thereafter flows out of the reforming catalyst. This exhaust gas merges with the exhaust gas that has not flown into (i.e. has detoured around) the reforming catalyst in the downstream of the reforming catalyst and then flows into the NOx catalyst. When performing NOx reduction processing for the NOx catalyst, it is desirable to cause the exhaust gas having an even distribution of fuel concentration to flow into the NOx catalyst in order to reduce NOx evenly in the entire region of the NOx catalyst.

### [Prior Art Documents]

### [Patent Documents]

[Patent document 1]: Japanese patent Application Laid-Open No. 2005-127257
[Patent document 2]: Japanese patent Application Laid-Open No. 9-38467
[Patent document 3]: Japanese patent Application Laid-Open No. 2005-127260
[Patent document 4]: Japanese patent Application Laid-Open No. 2007-177672

### DISCLOSURE OF THE INVENTION

### [Problems to be Solved by the Invention]

However, when introducing the reducing agent supplied through the reducing agent addition valve into the pre-stage catalyst together with the exhaust gas, it is difficult to make the concentration distribution of the reducing agent in the exhaust gas uniform with respect to cross sectional directions of the catalyst (i.e. directions perpendicular to the axial direction). In consequence, the exhaust gas flowing out of the pre-stage catalyst has an uneven distribution in terms of the concentration of reducing agent when it merges with the exhaust gas that has detoured around the pre-stage catalyst. If this is the case, it is difficult to achieve an even concentration distribution of reducing agent contained in the exhaust gas flowing into the exhaust gas purification apparatus.

The present invention has been made in view of the above situations, and an object thereof is to provide a technology that enables causing exhaust gas that is in a state in which an even concentration distribution of reducing agent is achieved to flow into an exhaust gas purification apparatus in an exhaust gas purification system for an internal combustion engine in which the reducing agent is supplied to a pre-stage catalyst that is configured in such a way that not the entire amount of the exhaust gas flowing in the exhaust passage but a portion thereof passes through it.

### [Means for Solving the Problem]

An exhaust gas purification system for an internal combustion engine according to the present invention that achieves the above object is characterized by comprising: an exhaust gas purification apparatus provided in an exhaust passage of an internal combustion engine; a pre-stage catalyst that is provided in the exhaust passage upstream of said exhaust gas purification apparatus and adapted in such a way that not the entire amount but a portion of exhaust gas flowing in the exhaust passage passes through it; reducing agent addition means provided upstream of said pre-stage catalyst for adding reducing agent to exhaust gas flowing into the pre-stage catalyst; and a separation member that separates a cross section of the exhaust passage into a catalyst side passage through which catalyst outflowing exhaust gas flowing out of said pre-stage catalyst is caused to pass and a detour side passage through which catalyst detouring exhaust gas that has detoured around the pre-stage catalyst is caused to pass, over a region from the downstream end of said pre-stage catalyst to a predetermined position between the pre-stage catalyst and said exhaust gas purification apparatus.

In the exhaust gas purification system according to the present invention, the reducing agent added to the exhaust gas by the reducing agent addition means is supplied to the exhaust gas purification apparatus after passing through the pre-stage catalyst. In the above-descried arrangement, the catalyst outflowing exhaust gas that is isolated in the catalyst side passage, among the catalyst side passage and the detour side passage separated by the separation member, from the catalyst detouring exhaust gas is firstly stirred in the catalyst side passage. Consequently, if there is an unevenness in the concentration distribution of the reducing agent in the exhaust gas flowing into the pre-stage catalyst, the exhaust gas is mixed in the catalyst side passage. In other words, mixing of the reducing agent contained in the catalyst outflowing exhaust gas is promoted in the catalyst side passage. Thereby, the concentration distribution of the reducing agent in the catalyst outflowing exhaust gas can be made uniform (or even) before the catalyst outflowing exhaust gas and the catalyst detouring exhaust gas are merged.

The catalyst outflowing exhaust gas flowing out of the catalyst side passage separated by the separation member into the exhaust passage is mixed with the catalyst detouring exhaust gas that has passed through the detour side passage in the downstream of the separation member. At that time, the catalyst outflowing exhaust gas to be mixed with the catalyst detouring exhaust gas has an even concentration distribution of the reducing agent. In consequence, after the merging of the catalyst outflowing exhaust gas and the catalyst detouring exhaust gas also, better uniformity in the concentration distribution of the reducing agent in the cross section of the exhaust passage can be achieved.

As above, in the above-described arrangement, the reducing agent added to the exhaust gas is gradually dispersed from a narrower area to a wider area in the cross section of the exhaust passage until the reducing agent is supplied to the exhaust gas purification apparatus. In consequence, exhaust gas having a uniform distribution of the concentration of the reducing agent can be caused to flow into the exhaust gas purification apparatus.

The separation member separates the cross section of the exhaust passage into the catalyst side passage and the detour side passage over the region from the downstream end of the pre-stage catalyst to a predetermined position between the pre-stage catalyst and the exhaust gas purification apparatus. The predetermined position mentioned here is a location downstream of the pre-stage catalyst and upstream of the exhaust gas purification apparatus in the exhaust passage. The predetermined position may be determined in advance by, for example, an experiment in such a way that better uniformity in the distribution of the concentration of the reducing agent contained in the exhaust gas flowing into the exhaust gas purification apparatus is achieved.

It is preferred that an expanding portion in which the cross sectional area of the exhaust passage becomes larger as compared to the portion of the exhaust passage in which the separating member is disposed be provided in at least a portion of the exhaust passage between the separating member and the exhaust gas purification apparatus. In the expanding portion, with an increase in the area of the channel of the exhaust gas, flows of the exhaust gas directed from the center to the outer circumference of the exhaust passage are created. Consequently, mixing of the reducing agent contained in the exhaust gas is further promoted. Thereby, better uniformity in the distribution of the reducing agent concentration in the exhaust gas flowing into the exhaust gas purification apparatus can be achieved.

The system may further comprise a turbocharger having a turbine disposed in the exhaust passage upstream of said reducing agent addition means and a compressor disposed in an intake passage of the internal combustion engine, and a cylindrical member disposed on a front end face of said pre-stage catalyst to guide a portion of the exhaust gas flowing out of said turbine to the front end face of the pre-stage catalyst, and said reducing agent addition means may add the reducing agent to the exhaust gas introduced in said cylindrical member.

Since the exhaust gas flowing into the turbine of the turbocharger causes a turbine wheel provided in the interior of the turbine to rotate, a swirling flow is created in the exhaust gas flowing out of the turbine. Therefore, the exhaust gas flowing out of the turbine flows downstream helically while swirling along the inner surface of the exhaust passage.

The cylindrical member guides a portion of the exhaust gas flowing out of the turbine to the front end face of the pre-stage catalyst. Since a swirling flow has been created in the exhaust gas flowing out of the turbine, the exhaust gas introduced in the cylindrical member flows toward the front end face of the pre-stage catalyst while continuously swirling along the inner surface of the cylindrical member.

In this arrangement, since the reducing agent is added to the exhaust gas that has been introduced into the cylindrical member and in which the swirling flow has been created as described above, the reducing agent can be favorably agitated by the swirling flow. Consequently, the reducing agent can be dispersed appropriately in the exhaust gas introduced in the cylindrical member. Furthermore, since the reducing agent that has been dispersed and diffused sufficiently in the exhaust gas can be supplied to the pre-stage catalyst, the utilization efficiency of the pre-stage catalyst can be enhanced. The utilization efficiency mentioned herein may be represented by, for example, the ratio of the quantity of the reducing agent that reacts on the catalyst and the quantity of the reducing agent added by the reducing agent addition means.

An opening may be provided in the side wall of said cylindrical member, and said reducing agent addition means may add the reducing agent to the exhaust gas introduced in said cylindrical member through said opening. This enables reliable addition of the reducing agent to the exhaust gas that flows toward the front end face of the pre-stage catalyst while swirling along the inner surface of the cylindrical member.

Now, the position at which the cylindrical member is disposed with respect to a cross sectional direction of the exhaust passage and the strength of the swirling flow created in the exhaust gas flowing in the cylindrical member will be discussed. In this specification, the cross sectional direction of the exhaust passage refers to a direction perpendicular to the axis (i.e. axial center line) of the exhaust passage. The "strength" of the swirling flow is a notion that represents the momentum of the swirling flow, and the higher strength means the larger momentum of swirling of the exhaust gas. The exhaust gas flowing in the portion of the exhaust passage between the turbine and the cylindrical member swirls along the inner surface of the exhaust passage about the axis of the exhaust passage. In consequence, the strength of the swirling flow increases from the axis of the exhaust passage toward the inner surface of the exhaust passage.

Therefore, it is preferred that the cylindrical member be arranged to be offset from the axis of the exhaust passage toward the inner surface of the exhaust passage. With this arrangement, a swirling flow having higher strength can be created in the cylindrical member. In other words, the exhaust gas introduced in the cylindrical member can be caused to swirl along the inner surface of the cylindrical member with larger momentum. Thereby, the reducing agent added by the reducing agent addition means can be agitated more drastically, and therefore the reducing agent added to the exhaust gas can be dispersed more excellently.

It is preferred that a portion of the cylindrical member is externally in contact with the inner surface of the exhaust passage. The strength of the swirling flow created in the exhaust gas flowing in the portion of the exhaust passage between the turbine and the cylindrical member becomes highest in the vicinity of the inner surface of the exhaust passage. Therefore, the exhaust gas that flows in the region in which the strength of the swirling flow is the highest can be introduced into the cylindrical member. Consequently, the strength of the swirling flow created in the cylindrical member can be made as high as possible, and therefore better dispersion of the reducing agent added by the reducing agent addition means can be achieved.

The means for solving the problem in the present invention may be adopted in combination, where feasible.

### [Effects of the Invention]

According to the present invention, in an exhaust gas purification system for an internal combustion engine in which the reducing agent is supplied to a pre-stage catalyst that is configured in such a way that not the entire amount of the exhaust gas flowing in the exhaust passage but a portion thereof passes through it, it is possible to supply exhaust gas that is in a state in which an even concentration distribution of reducing agent is achieved to an exhaust gas purification apparatus.

### [BRIEF DESCRIPTION OF THE DRAWINGS]

Fig. 1 is a diagram showing the general structure of an engine and its exhaust system according to embodiment 1.
Fig. 2 is a partial enlarged view of Fig. 1.
Fig. 3 includes conceptual diagrams illustrating the first to third mixing promotion sections, where conceptual diagram (a) illustrates the first mixing promotion section, conceptual diagram (b) illustrates the second mixing promotion section, and conceptual diagram (c) illustrates the third mixing promotion section.
Fig. 4 is a partial enlarged view of the exhaust system of an engine according to a modification of embodiment 1.
Fig. 5 is a partial enlarged view of an exhaust system of an engine according to embodiment 2.
Fig. 6 is a partial enlarged view of an exhaust system of an engine according to a modification of embodiment 2.
Fig. 7 is a diagram showing the general structure of an engine and its intake and exhaust system according to embodiment 3.
Fig. 8 is a partial enlarged view of an exhaust system of an engine according to embodiment 3.
Fig. 9 is a cross sectional view as seen in the direction of arrows A-A in Fig. 8.
Fig. 10 is a diagram showing a first modification of the exhaust system shown in Fig. 8.
Fig. 11 is a diagram showing a second modification of the exhaust system shown in Fig. 8.
Fig. 12 is a diagram showing a third modification of the exhaust system shown in Fig. 8.
Fig. 13 is a partial enlarged view of an exhaust system of an engine according to embodiment 4.
Fig. 14 is a cross sectional view as seen in the direction of arrows B-B in Fig. 13.

### [MODES FOR CARRYING OUT THE INVENTION]

In the following, embodiments for carrying out the present invention will be described in detail by way of example. The dimensions, materials, shapes and relative arrangements etc. of the components that will be described in connection with the embodiments are not intended to limit the technical scope of the present invention only to them, unless particularly stated.

### [Embodiment 1]

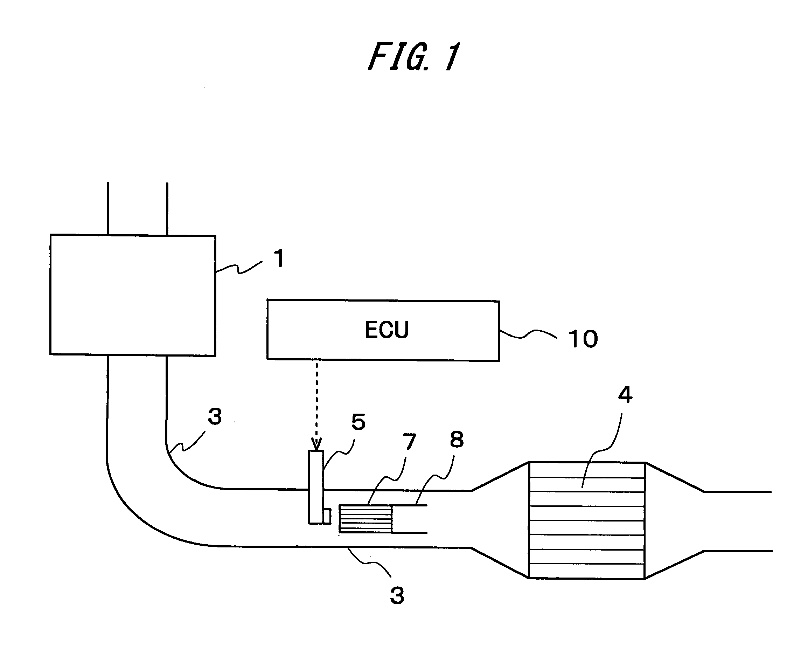

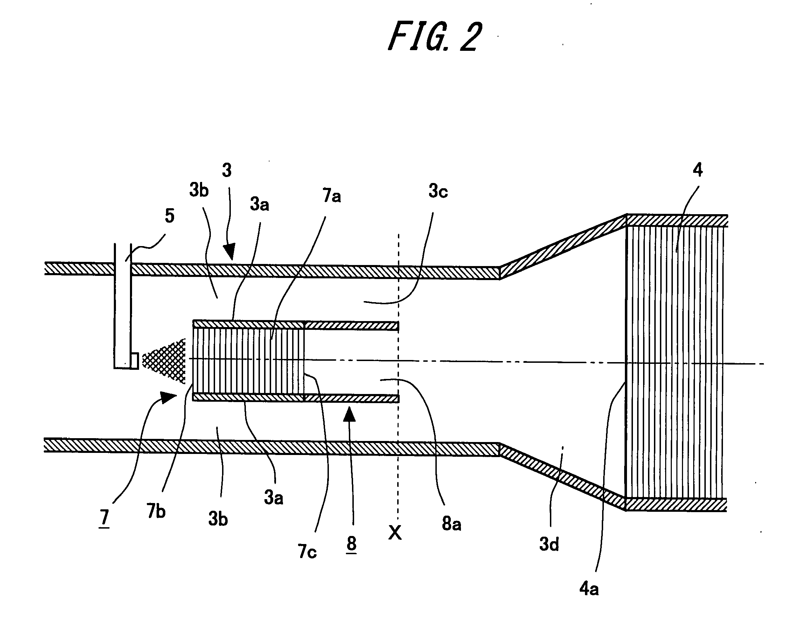

Embodiment 1 for carrying out the present invention will be described. Fig. 1 is a diagram showing the general construction of an engine 1 and its exhaust system according to this embodiment. Fig. 2 is an enlarged view of a portion of Fig. 1. The engine 1 shown in Fig. 1 is a four-cycle diesel engine. An exhaust pipe 3 having a substantially circular cross section is connected to the engine 1. In this embodiment, the exhaust pipe 3 corresponds to the exhaust passage according to the present invention.

The exhaust pipe 3 is connected to a muffler that is not shown in the drawings. An NOx storage reduction catalyst 4 (which will be simply referred to as the "NOx catalyst" hereinafter) is provided in the middle of the exhaust pipe 3. The NOx catalyst 4 has the functions of storing NOx when the air-fuel ratio of the inflowing exhaust gas is oxygen-rich (i.e. lean), releasing stored NOx when the oxygen concentration in the inflowing exhaust gas decreases, and reducing NOx under a condition in which a reducing component (e.g. fuel or the like) is present. In this embodiment, the NOx catalyst 4 corresponds to the exhaust gas purification apparatus according to the present invention.

A fuel addition valve 5 that adds fuel to the exhaust gas by ejecting a spray of liquid fuel (light oil) through an injection port (not shown) is provided in the exhaust pipe 3 upstream of the NOx catalyst 4. The fuel added to the exhaust gas through the fuel addition valve 5 is used for processes of recovering the exhaust gas purifying capability of the NOx catalyst 4, such as an NOx reduction process for reducing NOx stored in the NOx catalyst 4 and an SOx poisoning recovery process for recovery from SOx poisoning. The fuel added through the fuel addition valve 5 is also used to raise the temperature of the NOx catalyst 4.

Furthermore, a small-diameter catalyst 7 having an outer diameter smaller than the inner diameter of the exhaust pipe 3 and having a cylindrical shape is provided in the exhaust pipe 3 between the fuel addition valve 5 and the NOx catalyst 4. The small-diameter catalyst 7 in this embodiment has the function of partially oxidizing unburned components of the fuel (hydrocarbon: HC) in the exhaust gas to produce H₂ and CO. When the aforementioned NOx reduction process and SOx poisoning recovery process etc. are performed, liquid fuel added through the fuel addition valve 5 is reformed and thereafter supplied to the NOx catalyst 4. Thereby, the reactivity of fuel in the NOx catalyst 4 can be enhanced.

The small-diameter catalyst 7 will be described in detail with reference to Fig. 2. The portion of the exhaust pipe 3 in which the small-diameter catalyst 7 is provided has a double-tube structure including an inner pipe 3a. The inner pipe 3a has an axis coaxial with the exhaust pipe 3 (as shown by a chain double-dashed line in Fig. 2). The small-diameter catalyst 7 is housed in the inner pipe 3a in such a way as to be in contact with the inner circumferential surface thereof. The small-diameter catalyst 7 is disposed substantially at the center of the exhaust pipe 3 with respect to the cross sectional directions, and the axis of the small-diameter catalyst 7 coincides with the axis of the exhaust pipe 3 and the inner pipe 3a. The cross sectional directions of the exhaust pipe 3 referred to herein is directions perpendicular to the axis of the exhaust pipe 3. The small-diameter catalyst 7 in this embodiment is what is called a metal catalyst, in which a number of cells made of a metal (which is,
in this embodiment, a stainless steel) extending in the axial direction of the small-diameter catalyst 7 are provided in a honeycomb configuration. In consequence, the exhaust gas flowing into the small-diameter catalyst 7 flows in a passage (which will be hereinafter referred to as the "catalyst interior passage") 7a that is partitioned by a number of the cells.

Referring to the structure around the small-diameter catalyst 7 configured as above, a detour passage 3b through which the exhaust gas not flowing into the small-diameter catalyst 7 passes is defined between the outer circumferential surface of the inner pipe 3a and the inner circumferential surface of the exhaust passage 3 (outside the small-diameter catalyst 7 accordingly). Therefore, a portion of the exhaust gas discharged from the engine 1 passes through the catalyst interior passage 7a, and the other portion of the exhaust gas passes through the detour passage 3b to detour around the small-diameter catalyst 7. In other words, the small-diameter catalyst 7 is configured in such a way that not all but a portion of the exhaust gas flowing in the exhaust pipe 3 passes through it. In this embodiment, the small-diameter catalyst 7 corresponds to the pre-stage catalyst according to the present invention.

Now, relationship between the upstream end face 7b of the small-diameter catalyst 7 and a spray of fuel ejected from the injection port of the fuel addition valve 5 will be described. A substantially conical spray (illustrated by cross hatching in Fig. 2) is ejected from the injection port of the fuel addition valve 5. The injection port of the fuel addition valve 5 is opposed to the upstream end face 7b of the small-diameter catalyst 7 so that the spray of fuel ejected from the fuel injection port is introduced into the small-diameter catalyst 7 without interruption. In this embodiment, the fuel addition valve 5 corresponds to the reducing agent addition means according to the present invention.

An ECU (Electronic Control Unit) 10 that controls the operation state of the engine 1 in accordance with operation conditions of the engine 1 and requests made by the driver is annexed to the engine 1. The ECU 10 includes a CPU that executes various computation processes pertaining to control of the engine 1, a ROM in which programs and data needed for the control are stored, a RAM in which results of computations by the CPU are stored temporarily, and input/output ports for inputting/outputting signals to/from the outside etc. The fuel addition valve 5 is connected with the ECU 10 via electrical wiring and controlled by the ECU10. Specifically, when the aforementioned NOx reduction process, SOx poisoning recovery process, and temperature raising process etc. are performed, the addition of fuel through the fuel addition valve 5 is performed by the ECU 10.

Here, a control relating to the addition of fuel through the fuel addition valve 5 will be described taking the case of the execution of NOx reduction process for the NOx catalyst 4 as an example. Since the NOx storage capacity of the NOx catalyst 4 is limited, the NOx reduction process of reducing NOx stored in the NOx catalyst 4 to remove it is executed at appropriate timing before the NOx storage amount reaches the storage capacity. As described before, in the NOx reduction process, it is necessary to supply an NOx reducing component while decreasing the oxygen concentration in the exhaust gas flowing into the NOx catalyst 4 to the stoichiometric air-fuel ratio or to a rich air-fuel ratio. In this embodiment, reduction and removal of NOx stored in the NOx catalyst 4 is performed by making the air-fuel ratio of the exhaust gas flowing into the NOx catalyst 4 rich in a spike manner (in a short time) at a relatively short cycle time by controlling the addition of fuel through the fuel addition valve 5.

In the arrangement shown in Fig. 1, the exhaust pipe 3 is curved at a location upstream of the small-diameter catalyst 7. Therefore, there occurs a local difference in the flow rate of the exhaust gas along radial directions (cross sectional directions) of the exhaust pipe 3 in the vicinity of the upstream end face 7b of the small-diameter catalyst 7. In addition, since the exhaust gas ceaselessly strikes the end of the cells when the exhaust gas introduced into the catalyst interior passage 7a, flow of the exhaust gas is apt to be disturbed at the upstream end face 7b of the small-diameter catalyst 7. In consequence, it is highly likely that the fuel concentration in the exhaust gas flowing into the small-diameter catalyst 7 becomes uneven along radial directions of the small-diameter catalyst 7.

In conventional systems, the exhaust gas flowing out of the catalyst interior passage 7a in the small-diameter catalyst 7 (which exhaust gas will be hereinafter referred to as the "catalyst outflowing exhaust gas") and the exhaust gas having passed through the detour passage 3b (which exhaust gas will be hereinafter referred to as the "catalyst detouring exhaust gas") are caused to merge immediately at the downstream end face 7c of the small-diameter catalyst 7. However, since the catalyst interior passage 7a provided in the small-diameter catalyst 7 is partitioned by a number of the cells into narrow and long spaces, the above-mentioned unevenness in the distribution of the fuel concentration in the exhaust gas is maintained also in the catalyst outflowing exhaust gas. If the catalyst outflowing exhaust gas in which the fuel concentration is uneven is mixed with the catalyst detouring exhaust gas, it is difficult to make the distribution of the fuel concentration in the exhaust gas uniform by the time when the mixed exhaust gas reaches the NOx catalyst 4. Therefore, it has been difficult to reduce NOx evenly in the entire NOx catalyst 4.

In view of the above, in the exhaust gas purification system according to the embodiment, the following configuration is adopted in order to eliminate the above-described disadvantage. As shown in Fig. 2, an isolation pipe 8 having an outer shape substantially the same as the inner pipe 3a (i.e. cylindrical shape) is provided on the downstream end face 7c of the small-diameter catalyst 7. The isolation pipe 8 is arranged coaxially with the above-described exhaust pipe 3, the inner pipe 3a, and the small-diameter catalyst 7. In Fig. 2, the upstream end of the isolation pipe 8 is in contact with and joined to the downstream end of the inner pipe 3a. The isolation pipe 8 is made of a material that has a relatively high thermal conductivity.

Inside the isolation pipe 8, a catalyst side passage 8a through which only the catalyst outflowing exhaust gas passes is formed, while a detour side passage 3c through which only the catalyst detouring exhaust gas that has passed through the detour passage 3b passes is formed outside the isolation pipe 8 (i.e. between the outer circumferential surface of the isolation pipe 8 and the inner circumferential surface of the exhaust pipe 3). The isolation pipe 8 partitions or separates the cross section of the exhaust pipe 3 into the catalyst side passage 8a and the detour side passage 3c over a section ranging from the downstream end face 7c of the small-diameter catalyst 7 to a position X located between the small-diameter catalyst 7 and the NOx catalyst 4. In this embodiment, the position X is designed to be located downstream of the small-diameter catalyst 7 (specifically, the downstream end face 7c of the small-diameter catalyst 7) and upstream of the NOx catalyst 4 in the exhaust pipe 3, as illustrated. In this embodiment, the position X and the isolation pipe 8 correspond to the predetermined position and the separation member.

As shown in Fig. 2, the exhaust pipe 3 in this embodiment has a tapered portion 3d with which the inner diameter thereof gradually increases over a region from a position (midpoint) between the downstream end of the isolation pipe 8 (i.e. position X) and the upstream end face 4a of the NOx catalyst 4 to the upstream end face 4a of the NOx catalyst 4. Therefore, the cross sectional area of the tapered portion 3d is larger than the cross sectional area of the portion of the exhaust passage 3 in which the isolation pipe 8 is provided. In this embodiment, the tapered portion 3d corresponds to the expanding portion.

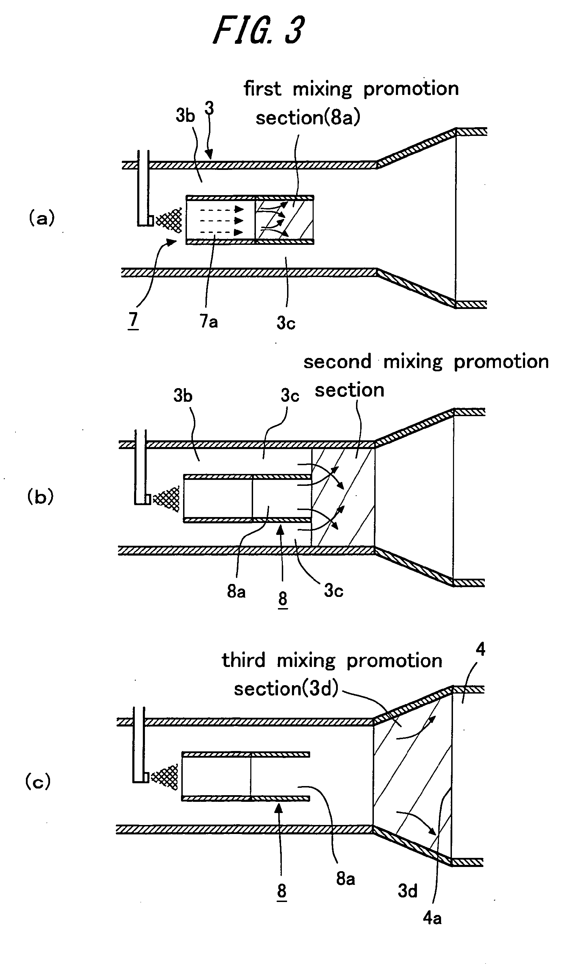

In this embodiment, unevenness in the fuel concentration distribution present in the catalyst outflowing exhaust gas is eliminated by promoting the mixing of fuel in the exhaust gas in the later-described first to third mixing promotion sections that are created in order from upstream in the exhaust pipe 3 by the above-described structure. Fig. 3 shows conceptual diagrams for illustrating the first to third mixing promotion sections. Fig. 3(a) is a conceptual diagram for illustrating the first mixing promotion section, Fig. 3(b) is a conceptual diagram for illustrating the second mixing promotion section, and Fig. 3(c) is a conceptual diagram for illustrating the third mixing promotion section. In the diagrams, the portions corresponding to the respective mixing promotion sections are indicated by hatching.

As shown in the diagrams, the first mixing promotion section is formed in the catalyst side passage 8a (i.e. the region inside the isolation pipe 8), and the second mixing promotion section is formed in the interior of the exhaust pipe 3 in the section from the downstream end of the isolation pipe 8 to the upstream end of the tapered portion 3d. The third mixing promotion portion is formed in the tapered portion 3d of the exhaust pipe 3. The areas occupied respectively by the first to third mixing promotion sections in the cross section of the exhaust pipe 3 increase stepwise in the mentioned order. In these diagrams, the occupied areas in the cross section of the exhaust pipe 3 increases in order of the first to third mixing promotion portions from the central portion in the cross section of the exhaust pipe 3 toward the inner circumferential surface thereof.

The state of mixture of fuel in the first mixing promotion section will be described with reference to Fig. 3(a). In the first mixing promotion section, the catalyst outflowing exhaust gas is agitated while it is isolated from the catalyst detouring exhaust gas, so that mixing of fuel in the catalyst outflowing exhaust gas is promoted. The arrows in the diagram show, in a simulated manner, flows of the exhaust gas passing through the catalyst interior passage 7a formed in the small-diameter catalyst 7 and flows of the catalyst outflowing exhaust gas having been introduced from the catalyst interior passage 7a to the catalyst side passage 8a.

As shown by the broken arrows in the diagram, the catalyst interior passage 7a is partitioned finely by a number of the cells along the axial direction of the small-diameter catalyst 7 (which coincides with the axial direction of the exhaust pipe 3). In consequence, the exhaust gas passing through the catalyst interior passage 7a is allowed to flow only along the aforementioned axial direction. However, after flowing into the catalyst side passage 8a (or the first mixing promotion section), this exhaust gas is allowed to move in radial directions of the exhaust pipe 3 as illustrated by the solid arrows in the diagram. Thus, portions of the exhaust gas having passed through separate catalyst interior passages 7a are mixed with each other in the first mixing promotion section, and mixing of fuel contained in the exhaust gas is also promoted. Consequently, unevenness in the fuel concentration distribution in the catalyst outflowing exhaust gas is firstly eliminated before the catalyst outflowing exhaust gas and the catalyst detouring exhaust gas are mixed together. In other words, the fuel concentration distribution in the catalyst outflowing exhaust gas can be made uniform.

Next, the state of mixture of fuel in the second mixing promotion section will be described with reference to Fig. 3(b). The catalyst outflowing exhaust gas flowing out of the catalyst side passage 8a (or the first mixing promotion section) merges with the catalyst detouring exhaust gas having passed through the detour passage 3b and the detour side passage 3c in the downstream of the isolation pipe 8 in the exhaust pipe 3. In the second mixing promotion section, the catalyst outflowing exhaust gas having a fuel concentration distribution having been improved (or made uniform) in the first mixing promotion section is mixed with the catalyst detouring exhaust gas.

In comparison of the flow speed and temperature between the catalyst outflowing exhaust gas and the catalyst detouring exhaust gas, the catalyst outflowing exhaust gas has a lower flow speed and higher temperature than the catalyst detouring exhaust gas. Therefore, there is a significant difference in the flow speed and temperature of the exhaust gas between the central portion and the outer peripheral portion in the cross section of the exhaust pipe 3. This leads to the creation of a vortex flow in the vicinity of the interface on which the catalyst outflowing exhaust gas and the catalyst detouring exhaust gas meet with each other, thereby promoting the mixing of the catalyst outflowing exhaust gas and the catalyst detouring exhaust gas. In this embodiment, the catalyst outflowing exhaust gas that has been made uniform in terms of the fuel concentration distribution in the first mixing promotion section can be mixed with the catalyst detouring exhaust gas, unlike with prior art systems in which the catalyst outflowing exhaust gas having uneven fuel concentration is mixed with the catalyst detouring exhaust gas. Therefore, the fuel concentration in the exhaust gas produced as the mixture of these exhaust gases (which will be hereinafter referred to as the "mixed exhaust gas") can also be made more uniform.

The material of which the isolation pipe 8 in this embodiment is made has a high thermal conductivity as described above. Therefore, the isolation pipe 8 is heated to a high temperature by the heat of reaction of fuel generated in the small-diameter catalyst 7 and the heat given by the catalyst outflowing exhaust gas etc. In consequence, heat is discharged from the outer circumferential surface of the isolation pipe 8 thus heated to a high temperature to the catalyst detouring exhaust gas that passes through the detour side passage 3c and has a temperature lower than isolation pipe 8. Consequently, in the catalyst detouring exhaust gas passing through the detour side passage 3c, the exhaust gas flowing in the region closer to the isolation pipe 8 has a higher temperature, and the exhaust gas flowing in the region closer to the inner circumferential surface of the exhaust pipe 3 has a lower temperature. Thus, there is created a local temperature difference in the catalyst detouring exhaust gas passing through the detour side passage 3c, so that turbulence is generated in the catalyst detouring exhaust gas. The turbulence of the exhaust gas continues to exist even after the exhaust gas reaches the second mixing promotion section. In consequence, mixing of the catalyst outflowing exhaust gas and the catalyst detouring exhaust gas in the second mixing promotion section can be promoted more favorably.

Next, the state of mixture of fuel in the third mixing promotion section will be described with reference to Fig. 3(c). Since the third mixing promotion section is provided in the tapered portion 3d of the exhaust pipe 3, the area of the flow channel of the mixed exhaust gas is larger than that in the second mixing promotion section. Consequently, flows of the mixed exhaust gas diverging in radial directions of the exhaust pipe 3 are created in the third mixing promotion section as indicated by arrows in Fig. 3(c). This disperses fuel contained in the mixed exhaust gas from the central portion toward the outer peripheral portions in the exhaust pipe 3. Thus, in the third mixing promotion section, the distribution of the fuel concentration in the mixed exhaust gas can be made uniform over the entire cross section of the tapered portion 3d.

As described above, according to the structure of this embodiment, even if unevenness in the fuel concentration distribution is created in the exhaust gas flowing into the small-diameter catalyst 7 as the addition of fuel through the fuel addition valve 5 is performed, mixing of fuel can be achieved gradually in the first to third mixing promotion sections. Consequently, the exhaust gas having a uniform fuel concentration distribution can be introduced into the NOx catalyst 4. Thus, NOx and SOx can be reduced evenly in the entire region of the NOx catalyst 4 in the NOx reduction process and the SOx reduction process. In addition, when a control for raising the temperature of the NOx catalyst 4 is performed, the temperature of the NOx catalyst 4 can be raised evenly over the entire region thereof.

Although in this embodiment an exemplary structure in which the first to third mixing promotion sections are arranged in order from upstream in the exhaust pipe 3 has been described as a mode for carrying out the present invention, the structure may be modified in the following way. That is, the tapered portion 3d need not be necessarily provided in the exhaust pipe 3 having the above-described structure. A uniform fuel concentration distribution in the mixed exhaust gas can be achieved by making the fuel concentration distribution in the catalyst outflowing exhaust gas uniform while isolating the catalyst outflowing exhaust gas and the catalyst detouring exhaust gas from each other in the first mixing promotion section and mixing the catalyst outflowing exhaust gas and the catalyst detouring exhaust gas in the second mixing promotion section.

The position X at which the downstream end of the isolation pipe 8 in the embodiment is located may be set to any appropriate position between the downstream end face 7c of the small-diameter catalyst 7 and the upstream end face 4a of the NOx catalyst 4 in the exhaust pipe 3. Changing this position X causes a change in the proportions of the lengths over which the first to third mixing promotion sections respectively extend along the longitudinal direction (or the axial direction) of the exhaust pipe 3. More specifically, changing the position X to a more downstream position in the exhaust pipe 3 increases the length over which the first mixing promotion section extends and decreases the length over which the second mixing promotion section and the third mixing promotion section extend. Conversely, changing the position X to a more upstream position in the exhaust pipe 3 decreases the length over which the first mixing promotion section extends and increases the length over which the second mixing promotion section and the third mixing promotion section extend. Therefore, it is preferred that the position X or the position at which downstream end of the isolation pipe 8 is located be determined appropriately by, for example, an experiment in such a way that better uniformity in the concentration distribution of fuel contained in the exhaust gas flowing into the NOx catalyst, i.e. the mixed exhaust gas, is achieved.

In the exhaust gas purification system according to the embodiment, various modifications can be made to the shapes and relative positional relationships of components such as the small-diameter catalyst 7, the isolation pipe 8, and the exhaust pipe 3 without departing from the essential scope of the present invention. For example, the isolation pipe 8 may have a shape different from a cylindrical shape. Although in this embodiment the isolation pipe 8 completely separates the cross section of the exhaust pipe 3 into the catalyst side passage 8a and the detour side passage 3c, other configurations may be adopted on condition that a major part of the catalyst outflowing exhaust gas in the catalyst side passage 8a can be isolated from the catalyst detouring exhaust gas.

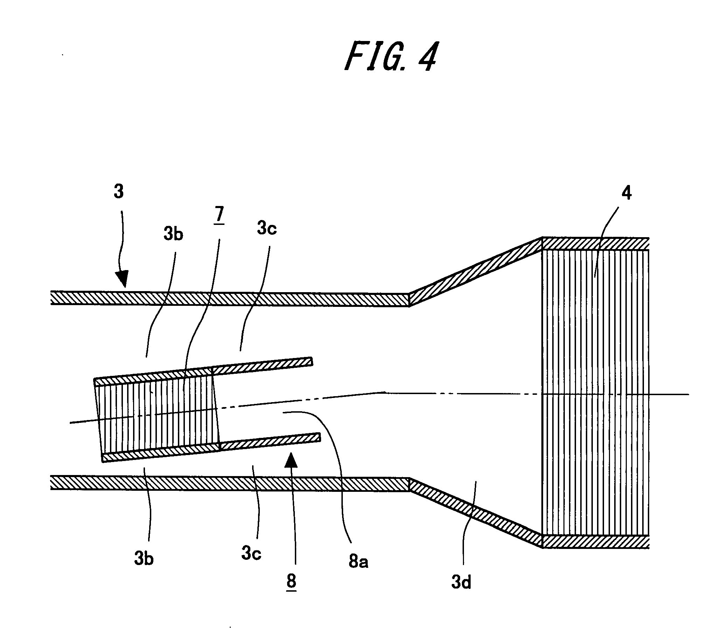

Although in the exemplary configuration shown in Figs. 1 to 3 the axes of the exhaust pipe 3 (including the tapered portion 3d), the small-diameter catalyst 7, and the isolation pipe 8 are coaxial, this is not essential. For example, the axes of the small-diameter catalyst 7 and the isolation pipe 8 may be arranged obliquely to the axis of the exhaust pipe 3 as shown in Fig. 4. This enables better mixing of the catalyst outflowing exhaust gas flowing out of the first mixing promotion section (catalyst side passage 8a) and the catalyst detouring exhaust gas having passed through the detour side passage 3c. Various modifications other than the configuration shown in Fig. 4 can be made to the embodiment without departing from the essential scope of the present invention, where feasible.

### [Embodiment 2]

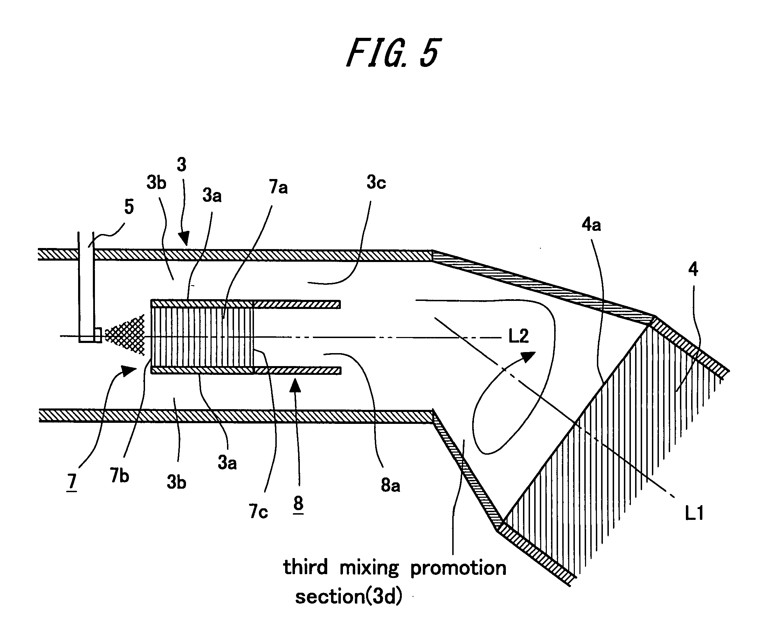

Next, embodiment 2 for carrying out the present invention will be described. In the basic configuration of the engine 1 and other hardware to which this embodiment is applied, counterparts of portions shown in Figs. 1 to 3 are denoted by the same symbols to eliminate description. Fig. 5 is an enlarged partial view of the exhaust system of the engine 1 according to this embodiment. In the exhaust system of the engine 1 according to this embodiment, the axis L1 of the tapered portion 3d is inclined relative to the axis L2 of the small-diameter catalyst 7. Although the axis of the portion of the exhaust pipe 3 located upstream of the tapered portion 3d and the axis of the isolation pipe 8 are coaxial with the axis L2 of the small-diameter portion 7, this is not essential to this embodiment.

The above-described arrangement is designed in such a way that the mixed exhaust gas flowing in the tapered portion 3d of the exhaust pipe 3 or the above-described third mixing promotion section impinges on the inner wall surface of the tapered portion 3d. The mixed exhaust gas impinging on the inner wall surface of the tapered portion 3d loses momentum of forward movement in the direction of the axis L1, and a vortex flow illustrated by an arrow in the drawing is created. This further promotes mixing of fuel in the mixed exhaust gas in the third mixing promotion section. In consequence, better uniformity in the fuel concentration distribution in the mixed exhaust gas flowing into the NOx catalyst 4 can be achieved.

### (Modification)

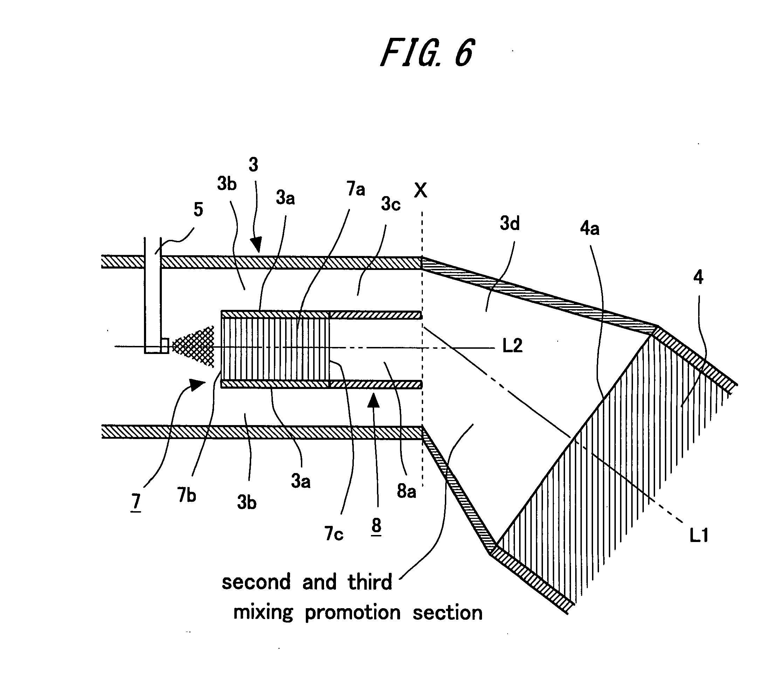

Next, a modification of the mode according to this embodiment will be described. Fig. 6 is an enlarged partial view of the exhaust system of the engine 1 according to the modification. In Fig. 6, what is different from the configuration shown in Fig. 5 is that the second mixing promotion section and the third mixing promotion section are combined. Specifically, the tapered portion 3d in this modification is configured to expand downstream from the position at which the downstream end of the isolation pipe 8 is located (position X) to the upstream end face 4a of the NOx catalyst 4. This can make the exhaust system of the engine 1 more compact while achieving operations and effects same as those of the configuration shown in Fig. 5. In other words, mixing of the added fuel contained in the mixed exhaust gas can be achieved in a more compact space.

Although in the above-described embodiment, a case in which the small-diameter catalyst 7 functions as a fuel reforming catalyst has been described by way of example, it may be other type of catalyst (e.g. oxidation catalyst). This also applies to the embodiments described in the following.

### [Embodiment 3]

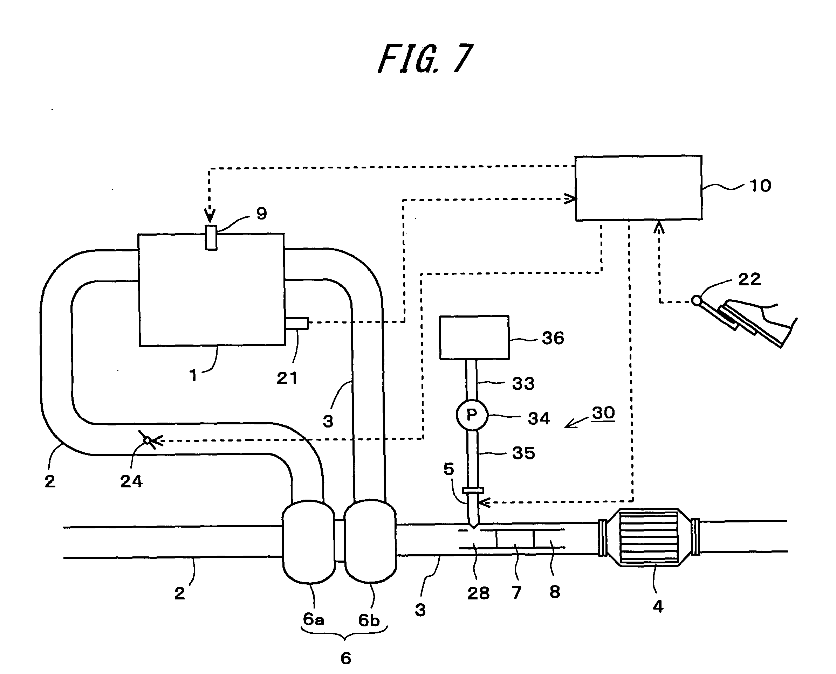

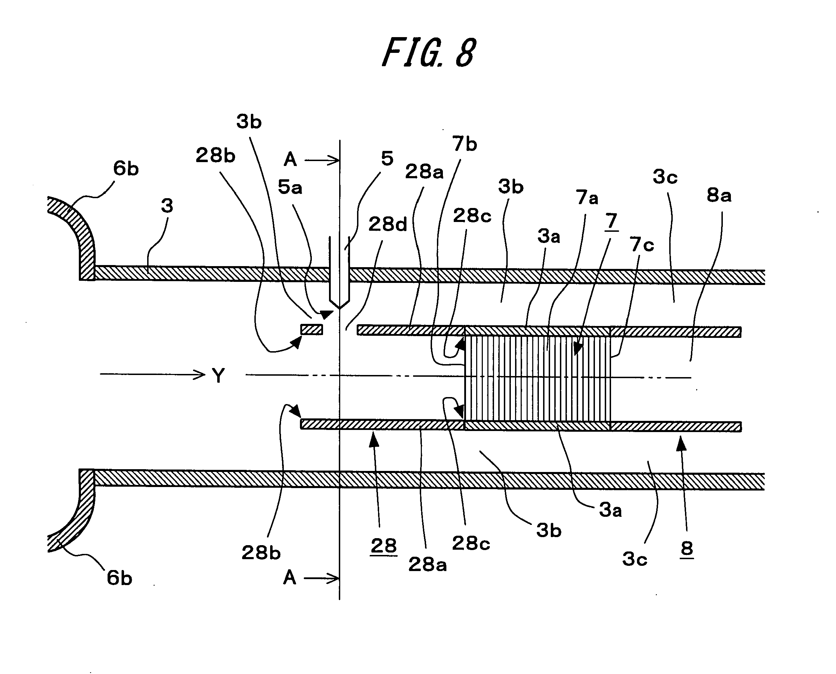

Embodiment 3 for carrying out the present invention will be described. Fig. 7 is a diagram showing the general configuration of the engine 1 and its intake and exhaust system according to this embodiment. Fig. 8 is an enlarged partial view of the exhaust system of the engine according to the embodiment. In this embodiment, counterparts of components in embodiments 1 and 2 are denoted by the same symbols to eliminate detailed description thereof. The engine 1 is connected with an exhaust pipe 3 and an intake pipe 2 having a substantially circular cross section. In the intake pipe 2, a compressor housing 6a of a turbocharger 6 is provided. A throttle valve 24 is provided in the intake pipe 2 downstream of the compressor housing 6a. In this embodiment, the intake pipe 2 and the exhaust pipe 3 correspond to the intake passage and the exhaust passage according to the present invention.

The exhaust pipe 3 is connected to a muffler that is not shown in the drawings, and a turbine housing 6b of the turbocharger 6 is provided in the middle of the exhaust pipe 3. An NOx catalyst 4 is provided in the exhaust pipe 3 downstream of the turbine housing 6b. The engine 1 is provided with an in-cylinder fuel injection valve 9 that supplies fuel to be burned in the engine 1 into a cylinder.

The ECU 10 is connected, by electrical wiring, with a crank position sensor 21 that outputs an electrical signal indicative of the crank angle of the engine 1, an accelerator opening degree sensor 22 that outputs an electrical signal indicative of the opening degree of the accelerator, and an air flow meter (not shown) that outputs an electrical signal indicative of the mass of the intake air flowing in the intake pipe 2 etc, and the output signals of them are input to the ECU 10. The ECU 10 can sense the engine speed of the engine 1, the engine load, and the intake air quantity etc. based on the output signals from the aforementioned sensors input to it. The ECU 10 is connected, by electrical wiring, with a throttle valve 24 and an in-cylinder fuel injection valve 9 etc, and the opening degree and the open/close status of them etc. are controlled by the ECU 10. In this embodiment, a small-diameter catalyst 7 is provided in the exhaust pipe 3 downstream of the turbine housing 6b and upstream of the NOx catalyst 4.

The configuration of the small-diameter catalyst 7 and the portion around it will be specifically described with reference to Fig. 8. The chain double-dashed line in Fig. 8 indicates the axis (axial center line) of the exhaust pipe 3. Here, the direction of flow of the exhaust gas from the upstream to the down stream of the exhaust pipe 3 that is parallel to the axis of the exhaust pipe 3 will be referred to as the "exhaust gas mainstream direction" (indicated by arrow Y in Fig. 8). In this embodiment also, the portion of the exhaust pipe 3 in which the small-diameter catalyst 7 is provided has a double-tube structure including an inner pipe 3a. The inner pipe 3a has an axis coaxial with the exhaust pipe 3 and has a cylindrical shape. The inner pipe 3 having the above-described shape is disposed at the center of the exhaust pipe 3 in the cross section perpendicular to the axis of the exhaust pipe 3.

In the inner pipe 3a, a small-diameter catalyst 7 having a cylindrical shape is accommodated in such a way that the outer circumferential surface thereof is in contact with the inner circumferential surface of the inner pipe 3a. The axis of the small-diameter catalyst 7 is coaxial with the axis of the exhaust pipe 3 and the inner pipe 3a. The configuration of the portion downstream of the small-diameter catalyst 7 is the same as that in embodiment 1. Specifically, an isolation pipe 8 is disposed on the downstream end face 7c of the small-diameter catalyst 7, and the isolation pipe 8 separates the cross section of the exhaust pipe 3 into a catalyst side passage 8a and a detour side passage 3c.

On the front end face (upstream end face 7b) of the small-diameter catalyst 7 is provided an introduction pipe 28 that introduces a portion of the exhaust gas flowing out of the turbine housing 6b to the upstream end face 7b of the small-diameter catalyst 7. The introduction pipe 28 is a cylindrical member having a cross sectional shape same as that of the inner pipe 3a, which is arranged coaxially with the exhaust pipe 3, the inner pipe 3a, and the small-diameter catalyst 7. The introduction pipe 28 has a "circumferential wall 28a", an "upstream end edge 28b" or an edge that defines an upstream end opening, a "downstream end edge 28c" or an edge that defines a downstream end opening, and a "circumferential wall opening 28d" or an opening provided on the circumferential wall 28a.

The direction normal to a virtual plane determined by three different points on the upstream end edge 28b (downstream end edge 28c) coincides with the exhaust gas mainstream direction. The downstream end edge 28c abuts on and is joined to the upstream end edge of the inner pipe 3a. The circumferential wall opening 28d is configured to be circular. In this embodiment, the introduction pipe 28 corresponds to the cylindrical member according to the present invention. The circumferential wall 28a in this embodiment corresponds to the side wall of the cylindrical member according to the present invention, and the circumferential wall opening 28d corresponds to the opening provided on the side wall of the cylindrical member according to the present invention.

In the exhaust gas purification system having the above-described configuration, the outer circumferential surface of the introduction pipe 28 and the outer circumferential surface of the inner pipe 3a are configured to be continuous, and the outer diameter of them is smaller than the inner diameter of the exhaust pipe 3. Thus, a detour passage 3b through which the exhaust gas detours around the introduction pipe 28 and the small-diameter catalyst 7 is formed between the outer circumferential surface of the introduction pipe 28 and the inner pipe 3a and the inner circumferential surface of the exhaust pipe 3. A portion of the exhaust gas flowing out of the turbine housing 6b flows into the introduction pipe 28 through the upstream end edge 28b, and the other part of the exhaust gas passes through the detour passage 3b.

Next, a fuel addition apparatus 30 in this embodiment will be described. Details of the construction of the fuel addition apparatus 30 will be described later. Its general function is to add fuel serving as a reducing agent to the exhaust gas introduced into the introduction pipe 28 or the exhaust gas flowing in the introduction pipe 28. Since the exhaust gas flowing in the introduction pipe 28 is introduced to the upstream end face 7b of the small-diameter catalyst 7, the fuel added by the fuel addition apparatus 30 is supplied to the same catalyst 7. The fuel supplied to the small-diameter catalyst 7 is partly oxidized in the small-diameter catalyst 7, so that H₂ and CO that function as good reducing components are generated. The fuel having been reformed in the small-diameter catalyst 7 is supplied to the NOx catalyst 4 disposed downstream and used in the process of recovering the exhaust gas purification capability of the NOx catalyst 4. Examples of the process of recovering the exhaust gas purification capability include an NOx reduction process for reducing NOx stored in the NOx catalyst 4 and an SOx poisoning recovery control for recovery from poisoning by sulfur oxide (SOx).

Details of the construction of the fuel addition apparatus 30 is now described. The fuel addition apparatus 30 has a fuel addition valve 5 (corresponding to the reducing agent addition means), a fuel intake pipe 33, a fuel pump 34, and a fuel supply pipe 35. A fuel injection port 5a is provided at the end of the fuel addition valve 5. The axis of the fuel addition valve 5 is perpendicular to the axis of the exhaust pipe 3. The fuel addition valve 5 is connected with the ECU 10 through electrical wiring, and opening/closing of the fuel addition valve 5 and the opening period thereof are controlled by the ECU 10.

One end of the fuel intake pipe 33 is connected to the fuel tank 36 of the engine 1, and the other end thereof is connected to the fuel pump 34. One end of the fuel supply pipe 35 is connected to the fuel pump 34, and the other end thereof is connected to the fuel addition valve 5. The fuel pump 34 is a mechanical pump that is mechanically actuated. The fuel pump 34 operates utilizing a driving force of the power output shaft (crankshaft) of the engine 1 that is not shown in the drawings. Alternatively, the fuel pump 34 may be an electrical supply pump that operates utilizing a driving force of a motor (not shown). In the latter case, the fuel discharge pressure is controlled by adjusting the electrical power supplied to the fuel pump 34.

In the fuel addition apparatus 30 having the above-described construction, the fuel pump 34 sucks fuel stored in the fuel tank 36 through the fuel intake pipe 33 and discharges it to the fuel supply pipe 35. The fuel discharged to the fuel supply pipe 35 is supplied to the fuel addition valve 5. As the fuel addition valve 5 is opened by a control signal from the ECU 10, fuel is injected into the exhaust gas through the injection port 5 of the fuel addition valve 5.

Next, the method of supplying fuel injected through the fuel addition valve 5 into the introduction pipe 28 will be described with reference to the relationship between the injection port 5a of the fuel addition valve 5 and the circumferential wall opening 28d provided in the circumferential wall 28a of the introduction pipe 28. The injection port 5a is disposed at a position facing the interior of the detour passage 3b provided outside the circumferential wall 28a of the introduction pipe 28, and fuel is ejected from the injection port 5a toward the circumferential wall opening 28d.

The opening position and opening diameter etc. of the circumferential wall opening 28d are determined in such a way that a spray of fuel ejected from the injection port 5a is introduced into the introduction pipe 28 without falling on the circumferential wall 28a. In this embodiment, the apex angle of the cone subtended by the edge of the circumferential wall opening 28d at the injection port 5a is designed to be larger than the angle of the spray ejected from the injection port 5a. With this design, the fuel ejected from the injection port 5a of the fuel addition valve 5 can be added to the exhaust gas introduced into the introduction pipe 28 appropriately through the circumferential wall opening 28d.

In order to promote the reduction reaction of NOx and SOx in the aforementioned process of recovering the exhaust gas purification capability of the NOx catalyst 4, it is preferred that the fuel reforming efficiency (or utilization efficiency) of the small-diameter catalyst 7 be enhanced. The fuel reforming efficiency can be expressed by the ratio of the quantity of fuel reformed in the small-diameter catalyst 7 and the quantity of fuel supplied to the same catalyst. In this connection, the fuel reforming efficiency can be enhanced by sufficiently dispersing fuel in the exhaust gas when fuel is supplied to the small-diameter catalyst 7.

In view of this, in this embodiment, a swirling flow is created in the exhaust gas introduced in the introduction pipe 28, so that fuel is agitated by the swirling flow, thereby promoting dispersion of fuel. Specifically, as the exhaust gas discharged from the engine 1 flows into the turbine housing 6b, the exhaust gas causes the turbine wheel (not shown) having blades provided in the turbine housing 6b to rotate. In consequence, a swirling flow is created in the exhaust gas flowing out of the turbine housing 6b. The swirling flow mentioned here refers to a flow of exhaust gas swirling in the circumferential direction of the exhaust pipe 3.

The axis of rotation of the swirling flow created in the exhaust gas as described above coincides with the axis of the exhaust pipe 3. Specifically, the exhaust gas flowing in the exhaust pipe 3 downstream of the turbine housing 6b flows toward the introduction pipe 28 located downstream while swirling along the inner circumferential surface of the exhaust pipe 3 about the axis of the exhaust pipe 3. In other words, the exhaust gas flowing out of the turbine housing 6b flows in the exhaust gas mainstream direction in a helical manner along the inner circumferential surface of the exhaust pipe 3.

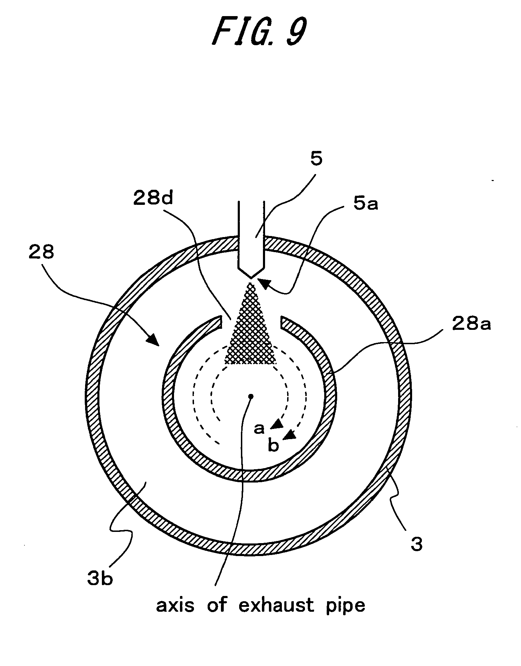

Fig. 9 is a cross sectional view as seen in the direction of arrows A-A in Fig. 8. The cross hatching in Fig. 9 schematically represents a spray of fuel ejected from the fuel addition valve 5. In this embodiment, since the introduction pipe 28 and the exhaust pipe are coaxial, the exhaust gas in which a swirling flow is created is introduced into the introduction pipe 28 without interruption. Therefore, the swirling flow that has been created in the exhaust pipe 3 upstream of the introduction pipe 28 continues to exist also in the interior of the intake pipe 28. Consequently, the exhaust gas introduced into the introduction pipe 28 flows toward the upstream end face 7b of the small-diameter catalyst 7 while swirling along the inner circumferential surface of the circumferential wall 28a.

The rotational axis (which may also be called helical axis) of the swirling flow created in the exhaust gas in the interior of the introduction pipe 28 coincides with the axis of the introduction pipe 28, and the direction of swirling of the exhaust gas coincides with the circumferential direction of the introduction pipe 28 as indicated by broken arrows a, b in the drawing. On the other hand, a spray of fuel ejected from the injection port 5a of the fuel addition valve 5 and introduced into the introduction pipe 28 through the circumferential wall opening 28d travels toward the center of the introduction pipe 28 with respect to the radial directions. Consequently, the spray of fuel impinges transversely on the swirling flow of the exhaust gas created in the introduction pipe 28. Therefore, the swirling flow can appropriately agitate the fuel added to the exhaust gas flowing in the introduction pipe 28, thereby promoting dispersion and diffusion of the fuel in the exhaust gas. Thus, the fuel reforming efficiency in the small-diameter catalyst 7 can be enhanced.

Furthermore, the fuel flowing out of the small-diameter catalyst 7 is mixed in the exhaust gas gradually in the first to third mixing promotion sections that have been already described. To sum up, before the exhaust gas flows into the small-diameter catalyst 7, dispersion and diffusion of fuel in the exhaust gas is promoted in the introduction pipe 28, and after the exhaust gas flows out of the small-diameter catalyst 7, mixing of fuel in the exhaust gas is promoted by the mixing promotion sections. In consequence, the exhaust gas having a uniform fuel concentration distribution can flow into the NOx catalyst 4. Thus, NOx and SOx can be reduced evenly in the entire region of the NOx catalyst 4 in the NOx reduction process and the SOx poisoning recovery process.

The rotational axis of the swirling flow created in the introduction pipe 28 coincides with the axis of the introduction pipe 28. Therefore, the strength of the swirling flow increases from the axis of the introduction pipe 28 toward the inner circumferential surface of the circumferential wall 28a. Here, the "strength" of the swirling flow is a notion that represents the momentum of the swirling flow, and the higher strength means the larger momentum of swirling of the exhaust gas. Therefore, the strength of the swirling flow indicated by broken arrow b created in a portion closer to the inner circumferential surface of the circumferential wall 28a is greater than the strength of the swirling flow indicated by broken arrow a created in a portion distant from the inner circumferential surface of the circumferential wall 28a.

In this embodiment, fuel is introduced into the introduction pipe 28 through the circumferential wall opening 28d provided in the circumferential wall 28a.
As described above, the strength of the swirling flow created in the introduction pipe 28 is greatest in the neighborhood of the inner circumference of the circumferential wall 28a. Therefore, in the structure according to the embodiment, fuel can be added to a portion in which the strength of the swirling flow is very high, and therefore fuel can be dispersed in the exhaust gas more appropriately.

In this embodiment, since the circumferential wall opening 28d opens in the circumferential wall 28a, the circumferential wall opening 28d does not abut on the upstream end edge 28b. In other words, the circumferential wall opening 28d is provided in a portion between the upstream end edge 28b and the downstream end edge 28c. This eliminates the possibility that a large quantity of fuel flows out through from the upstream end edge 28b of the introduction pipe 28, even if fuel supplied into the introduction pipe 28 through the circumferential wall opening 28d evaporates and expands. Therefore, the fuel injected through the fuel addition valve 5 can be supplied appropriately to the small-diameter catalyst 7.

In this embodiment, the fuel ejected from the injection port 5a of the fuel addition valve 5 is introduced into the introduction pipe 28 after traversing the detour passage 3b. The momentum of the spray of fuel or the penetration force of the spray generally decreases with an increase in the distance from the injection port 5a. Therefore, if the flow speed of the exhaust gas flowing in the introduction pipe 28 is excessively high, it may be difficult to introduce fuel into the introduction pipe 28 through the circumferential wall opening 28d in some cases.

According to the arrangement in this embodiment, the flow speed of the exhaust gas flowing in the introduction pipe 28 can be made lower than the flow speed of the exhaust gas flowing in the detour passage 3b. This is because the introduction pipe 28 is disposed on the upstream end face 7b of the small-diameter catalyst 7, and the flow speed of the exhaust gas flowing in the introduction pipe 28 is limited by the flow speed of the exhaust gas passing through the small-diameter catalyst 7. In consequence, it is easy to introduce fuel from the detour passage 3b into the interior of the introduction pipe 28 through the circumferential wall opening 28d, and the addition of fuel to the exhaust gas introduced in the introduction pipe 28 can be achieved readily.

Although in this embodiment the exhaust pipe 3 and the introduction pipe 28 are configured to have cylindrical shapes, and the small-diameter catalyst 7 is configured to have a cylindrical column-like shape, the shapes of them are not limited to those in the above-described embodiment. In order to maintain the swirling flow created in the exhaust gas flowing in the exhaust pipe 3 and the introduction pipe 28, it is preferred that they have circular internal shapes as is the case with this embodiment. However, the internal shapes of them may be modified appropriately to an extent that allows the swirling flow of the exhaust gas to be maintained. The circumferential wall opening 28d that opens in the circumferential wall 28a of the introduction pipe 28 may have a shape other than circular shapes. Although in the arrangement according to this embodiment the isolation pipe 8 is provided on the downstream end face 7c of the small-diameter catalyst 7, the isolation pipe 8 may be eliminated. This is because fuel added to the exhaust gas flowing in the introduction pipe 28 can be agitated by the swirling flow of the exhaust gas, and dispersion and diffusion of fuel in the exhaust gas can be promoted even if the isolation pipe 8 is not provided downstream of the small-diameter catalyst 7.

### (Modification)

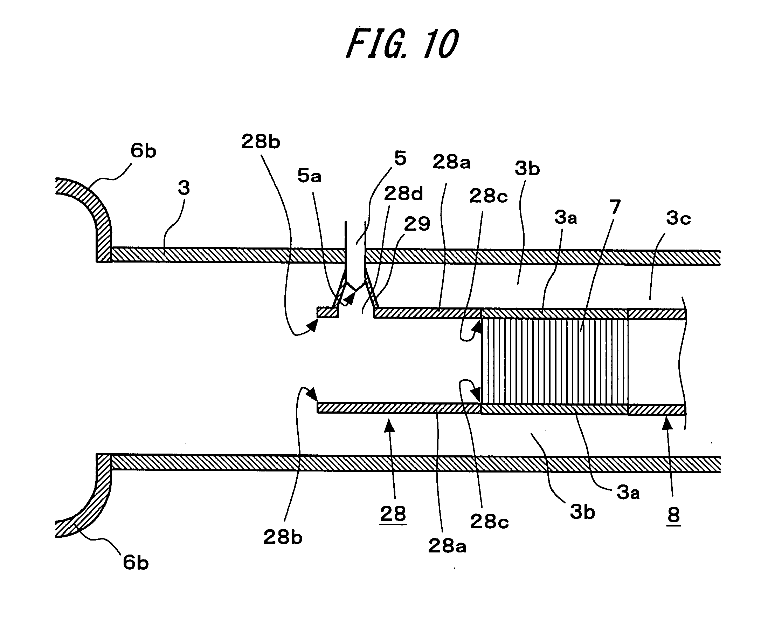

Next, modifications of this embodiment will be described. Fig. 10 is a diagram showing a first modification of the exhaust system shown in Fig. 8. The fuel addition apparatus 30 in this modification has a fuel introduction pipe 29 that interconnects the fuel addition valve 5 and the introduction pipe 28, and fuel is supplied from the fuel addition valve 5 into the introduction pipe 28 through the fuel introduction pipe 29. The fuel introduction pipe 29 in this modification has a cylindrical shape. One end of it is connected to the outer circumferential side surface of the fuel addition valve 5, and the other end of it is connected to the edge of the circumferential wall opening 28d of the circumferential wall 28a. The diameter of the fuel introduction pipe 29 increases from the injection port 5a toward the circumferential wall opening 28d in a flaring manner so that a spray of fuel ejected from the injection port 5a does not fall on the inner circumferential surface of the fuel introduction pipe 29.

In this modification, the injection port 5a of the fuel addition valve 5 is injected into the fuel introduction pipe 29 and added to the exhaust gas flowing in the introduction pipe 28 through the fuel introduction pipe 29. Thus, since fuel is not injected from the fuel addition valve 5 into the detour passage 3b, fuel can surely be introduced into the introduction pipe 28 without affected by the exhaust gas passing through the detour passage 3b.

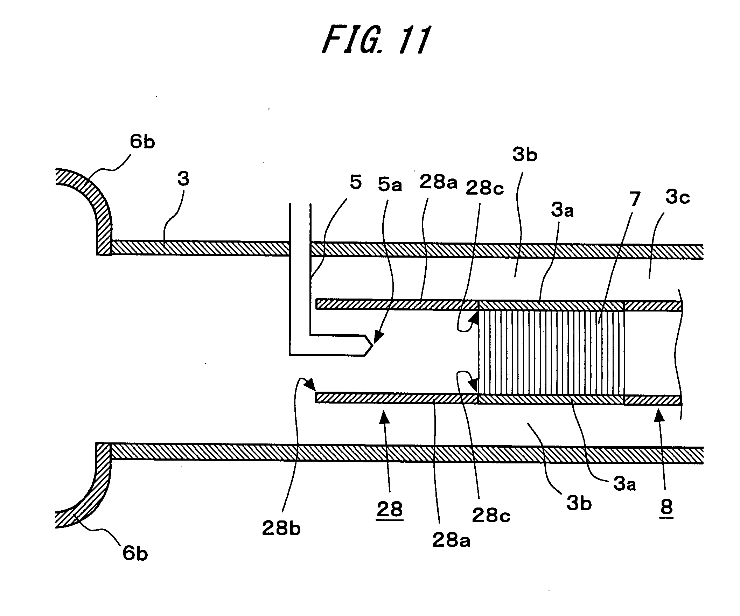

Fig. 11 is a diagram showing a second modification of the exhaust system shown in Fig. 8. This modification is different from the arrangement shown in Fig. 8 in that the circumferential wall 28a of the introduction pipe 28 is not provided with the circumferential wall opening 28d. The fuel addition valve 5 is configured to have a substantially L-shape, and the injection port 5a is located in the interior of the introduction pipe 28. With this arrangement also, fuel can be added to the exhaust gas introduced in the introduction pipe 28. Therefore, swirling flow of the exhaust gas created in the introduction pipe 28 can appropriately agitate fuel, thereby favorably promoting dispersion and diffusion of the fuel in the exhaust gas.

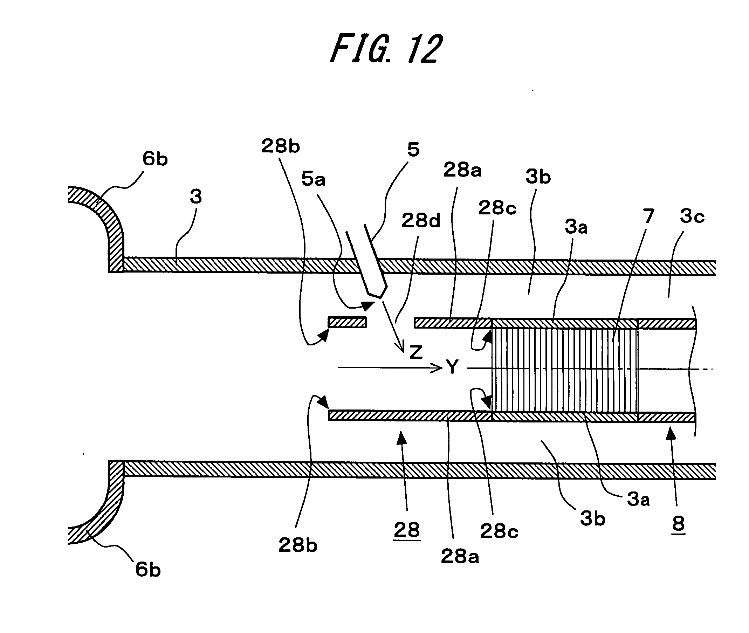

Fig. 12 is a diagram showing a third modification of the exhaust system shown in Fig. 8. Arrow Y in the drawing indicates the "exhaust gas mainstream direction" that has been described in connection with Fig. 8. Arrow Z in the drawing indicates the direction in which fuel is ejected from the injection port 5a of the fuel addition valve 5. This direction of ejection is the direction in which the center of the spray of fuel is oriented. As shown in the drawing, in this modification the axis of the fuel addition valve 5 is inclined relative to the axis of the exhaust pipe 3, and the fuel addition valve 5 is arranged in such a way that the direction of ejection of fuel and the exhaust gas mainstream direction form an acute angle. With this arrangement, the fuel addition valve 5 injects fuel into the detour passage 3b toward the downstream direction with respect to the axial direction of the exhaust pipe 3.

The swirling flow of the exhaust gas created in the introduction pipe 28 travels in the exhaust gas mainstream direction with its rotation axis coinciding with the axis of the introduction pipe 28. With the above arrangement, fuel supplied into the introduction pipe 28 is supplied through the circumferential wall opening 28d toward the downstream direction with respect to the axial direction of the introduction pipe 28. This enables the fuel supplied into the introduction pipe 28 to be favorably caught in the swirling flow of the exhaust gas and can accordingly achieve appropriate dispersion of fuel in the introduction pipe 28.

### [Embodiment 4]

Next, embodiment 4 for carrying out the present invention will be described. In this embodiment, counterparts of components in the embodiment 3 are denoted by the same symbols to eliminate detailed description thereof. Here, what is different from embodiment 3 will be mainly described.

The exhaust gas flowing in the portion of the exhaust pipe 3 between the turbine housing 6b and the introduction pipe 28 is swirling along the inner circumferential surface of the exhaust pipe 3, and the center of the swirling flow coincides with the axis of the exhaust pipe 3. The variation in the strength of the swirling flow with the change in the radial position in the exhaust pipe 3 is that the strength of the swirling flow increases from the axis of the exhaust pipe 3 toward the inner circumferential surface of the exhaust pipe 3. In view of this, in this embodiment the position at which the introduction pipe 28 is disposed is offset from the axis of the exhaust pipe 3 toward the inner circumferential surface of the exhaust pipe 3, in order to create swirling flow having higher strength. The aforementioned position at which the introduction pipe 28 is disposed refers to the position in the cross section perpendicular to the axis of the exhaust pipe 3.

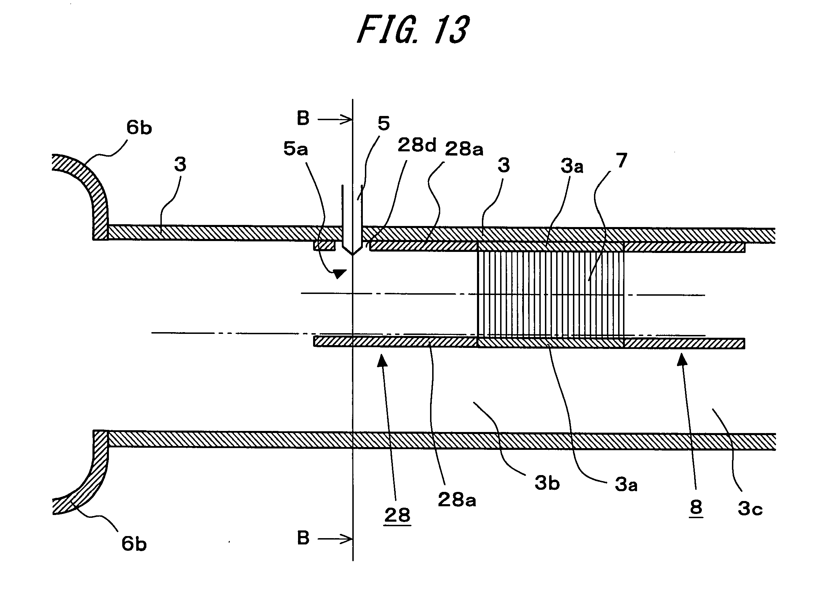

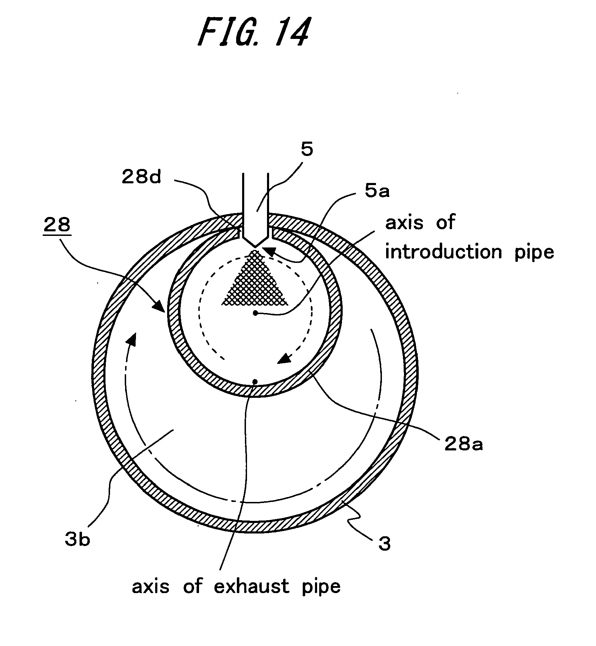

Fig. 13 is an enlarged partial view of the exhaust system of the engine according to this embodiment. Fig. 14 is a cross sectional view as seen in the direction of arrows B-B in Fig. 13. In Fig. 13, the alternate long and short dashed line represents the axis of the introduction pipe 28 and the inner pipe 3a, and the chain double-dashed line represents the axis of the exhaust pipe 3. In this embodiment, the axis of the introduction pipe 28 and the axis of the inner pipe 3a are coaxial and offset from the axis of the exhaust pipe 3. In this embodiment, the introduction pipe 28 and the inner pipe 3a are externally in contact with the inner circumferential surface of the exhaust pipe 3 so that the injection port 5a of the fuel addition valve 5 faces the interior of the introduction pipe 28 through the circumferential wall opening 28d.

The broken arrow in Fig. 14 schematically illustrates a swirling flow created in the introduction pipe 28, and the alternate long and short dashed arrow schematically illustrates a swirling flow created in the detour passage 3b. As described above, at locations upstream of the upstream end opening of the introduction pipe 28, the strength of the swirling flow created in the exhaust gas becomes highest in the vicinity of the inner circumferential surface of the exhaust pipe 3. In this embodiment, since the upstream end opening of the introduction pipe 28 opens in the vicinity of the inner circumferential surface of the exhaust pipe 3, the strength of the swirling flow created in the exhaust gas introduced in the introduction pipe 28 can be made as high as possible. In consequence, dispersion and diffusion of fuel in the exhaust gas flowing in the introduction pipe 28 can be promoted as much as possible, and the fuel reforming efficiency of the small-diameter catalyst 7 can be enhanced.

In the above-described arrangement according to this embodiment, since the injection port 5a of the fuel addition valve 5 is arranged to face the interior of the introduction pipe 28, fuel can be added directly to the exhaust gas in the introduction pipe 28. Therefore, fuel injected through the fuel addition valve 5 can be supplied to the small-diameter catalyst 7 reliably.

In this embodiment, the portion of contact of the introduction pipe 28 and the inner circumferential surface of the exhaust pipe 3 may be made of the same member integrally, as a matter of course. In this embodiment, the introduction pipe 28 is arranged to be externally in contact with the inner circumferential surface of the exhaust pipe 3 in order that a swirling flow having as high strength as possible is created in the introduction pipe 28. However, the degree of offset of the axis of the introduction pipe 28 from the axis of the exhaust pipe 3 may be changed fittly. By offsetting the axis of the introduction pipe 28 from the axis of the exhaust pipe 3, an advantageous effect that the strength of the swirling flow can be made higher than that in the case where there is no offset between them is achieved.

Although in embodiments 3 and 4 the introduction pipe 28 and the inner pipe 3a are separate members, the invention is not limited to this, and various changes can be made to the embodiments without departing from the essential scope of the present invention. For example, the introduction pipe 28 and the inner pipe 3a may be constituted by the same member. The downstream end edge 28c of the introduction pipe 28 and the inner pipe 3a need not be necessarily joined, but they may be arranged close to each other. If this is the case, it is preferred that the introduction pipe 28 be disposed in such a way that the projection of the downstream end edge 28c along the axial direction of the introduction pipe 28 onto the upstream end face 7b of the small-diameter catalyst 7 is contained within the area of the upstream end face 7b. This can prevent the fuel supplied into the introduction pipe 28 from slipping into the detour passage 3b through the gap between the introduction pipe 28 and the inner pipe 3a (or the upstream end face 7b of the small-diameter catalyst 7). In other words, the fuel introduced into the introduction pipe 28 and added to the exhaust gas can surely be supplied to the small-diameter catalyst 7.

To agitate the fuel added by the fuel addition apparatus 30 by the swirling flow created in the introduction pipe 28, it is necessary to maintain the strength of the swirling flow that is created as the exhaust gas flows out of the turbine housing 6b at a level not lower than a certain level until the swirling flow is introduced into the introduction pipe 28. If the axial direction of the exhaust pipe 3 changes drastically between the turbine housing 6b and the introduction pipe 3, the momentum of swirling of the exhaust gas may decrease. Therefore, it is preferred that the portion of the exhaust pipe 3 between the turbine housing 6b and the introduction pipe 28 do not have a bent portion. If the exhaust pipe 3 is provided with a bent portion, it is preferred the angle of change in the axial direction of the exhaust pipe 3 between before and after (i.e. between upstream and downstream of) the bent portion be moderate. Allowable values of the above-mentioned angle may be determined in advance by an experiment, and an appropriate angle (e.g. 45 degrees or so) may be selected.

### [Description of the Reference Numerals and Symbols]

1: engine
3: exhaust pipe
3a: inner pipe
3b: detour passage
3c: detour side passage
3d: tapered portion
4: NOx storage reduction catalyst
5: fuel addition valve
6: turbocharger
6b: turbine housing
7: small-diameter catalyst
7a: catalyst interior passage
8: isolation pipe
8a: catalyst side passage
10: ECU
28: introduction pipe
28a: circumferential wall
28b: upstream end edge
28c: downstream end edge
28d: circumferential wall opening

## Claims

1. An exhaust gas purification system for an internal combustion engine **characterized by** comprising:
an exhaust gas purification apparatus provided in an exhaust passage of an internal combustion engine;
a pre-stage catalyst that is provided in the exhaust passage upstream of said exhaust gas purification apparatus and adapted in such a way that not the entire amount but a portion of exhaust gas flowing in the exhaust passage passes through it;
reducing agent addition means provided upstream of said pre-stage catalyst for adding reducing agent to exhaust gas flowing into the pre-stage catalyst; and
a separation member that separates a cross section of the exhaust passage into a catalyst side passage through which catalyst outflowing exhaust gas flowing out of said pre-stage catalyst is caused to pass and a detour side passage through which catalyst detouring exhaust gas that has detoured around the pre-stage catalyst is caused to pass, over a region from the downstream end of said pre-stage catalyst to a predetermined position between the pre-stage catalyst and said exhaust gas purification apparatus.

2. An exhaust gas purification system for an internal combustion engine according to claim 1, **characterized in that** an expanding portion in which the cross sectional area of the exhaust passage becomes larger as compared to the portion of the exhaust passage in which the separation member is disposed is provided in at least a portion of the exhaust passage between said separating member and said exhaust gas purification apparatus.

3. An exhaust gas purification system for an internal combustion engine according to claim 1 or 2, **characterized by** further comprising:
a turbocharger having a turbine disposed in the exhaust passage upstream of said reducing agent addition means and a compressor disposed in an intake passage of the internal combustion engine; and
a cylindrical member disposed on a front end face of said pre-stage catalyst to guide a portion of exhaust gas flowing out of said turbine to the front end face of the pre-stage catalyst,
wherein said reducing agent addition means adds the reducing agent to exhaust gas introduced in said cylindrical member.

4. An exhaust gas purification system for an internal combustion engine according to claim 3, **characterized in that** an opening is provided in a side wall of said cylindrical member, and said reducing agent addition means adds the reducing agent to exhaust gas introduced in said cylindrical member through said opening.

5. An exhaust gas purification system for an internal combustion engine according to claim 3 or 4, **characterized in that** said cylindrical member is arranged to be offset from the axis of the exhaust passage toward an inner surface of the exhaust passage.

6. An exhaust gas purification system for an internal combustion engine according to claim 5, **characterized in that** a portion of said cylindrical member is externally in contact with the inner surface of the exhaust passage.
